# EUROPÄISCHE PATENTSCHRIFT

(11) **EP 3 499 074 B1**
(45) Veröffentlichungstag und Bekanntmachung des Hinweises auf die Patenterteilung: **09.09.2020**
(21) Anmeldenummer: 18211328.2
(22) Anmeldetag: 10.12.2018
(51) Int. Cl.: F16D 65/12

(54) **BREMSSCHEIBE**
BRAKE DISC
DISQUE DE FREIN

(30) Priorität: 18.12.2017 DE 102017130290
(43) Veröffentlichungstag der Anmeldung: 19.06.2019
(73) Patentinhaber: SAF-HOLLAND GmbH, 63856 Bessenbach (DE)
(72) Erfinder: Hartmann, Mark, 63834 Sulzbach am Main (DE)
(74) Vertreter: Müller Schupfner & Partner Patent- und Rechtsanwaltspartnerschaft mbB

(56) Entgegenhaltungen:
- DE-A1- 19 929 391
- DE-A1-102012 215 247
- FR-A1- 3 001 015

## Beschreibung

Die Erfindung betrifft eine Bremsscheibe, insbesondere für den Einsatz in Nutzfahrzeugen.

Bremsscheiben sind bereits aus dem Stand der Technik bekannt, diese dienen dazu, eine Achse, mit welcher die Bremsscheibe drehfest verbunden ist, abzubremsen. Problematisch ist dabei, insbesondere bei Nutzfahrzeugen, dass für eine sichere Kraftübertragung die Anschlussbereiche an eine Radnabe sich weit radial nach außen erstrecken müssen, sodass die Bremsscheibe zum einen ein hohes Gewicht und zum anderen einen großen Bauraumbedarf aufweist.

Die FR 3 001 015 A1 betrifft eine Bremsscheibe mit zwei Reibflächen, wobei zwischen den beiden Reibflächen innere Kühlkanäle angeordnet sind. Die Narbe ist mit einer gewölbten Platte versehen, die an ihrem Umfang zwei axialverschobene Armlinien aufweist, welche mit einer Krone verbunden sind, die mit den zwei Reibflächen verbunden ist.

Die DE 199 29 391 A1 betrifft eine Bremsscheibe für Scheibenbremsen, insbesondere von Landfahrzeugen, mit einem topfartigen Narbenabschnitt, welcher einerseits zur Verschraubung mit einer Radnarbe und andererseits zur Verbindung mit einem Reibring ausgebildet ist, wobei der Mantel des Narbenabschnitts wenigstens in einem sich an dem Ring anschließenden Mantelbereich aufgrund von Materialgestaltung, Materialstärke und/oder Materialauswahl elastisch nachgiebig ausgebildet ist.

Die DE 10 2012 215 247 A1 betrifft eine Radlageranordnung für Fahrzeuge umfassend ein Radlager und ein Radlagerflansch.

Es ist daher die Aufgabe der vorliegenden Erfindung, eine leichte Bremsscheibe, insbesondere für Nutzfahrzeuge, bereitzustellen, welche nur einen geringen Bauraumbedarf aufweist.

Diese Aufgabe wird mittels einer Bremsscheibe gemäß dem Anspruch 1 und mittels einer Bremsanordnung gemäß Anspruch 14 gelöst. Bevorzugte Merkmale und Ausführungen ergeben sich aus den Unteransprüchen.

Erfindungsgemäß umfasst eine Bremsscheibe, insbesondere für Nutzfahrzeuge, einen Reibabschnitt, einen Zwischenabschnitt und einen Verbindungsabschnitt, wobei die Bremsscheibe dazu ausgelegt ist, um eine Rotationsachse zu rotieren oder rotierbar gelagert zu sein, wobei der Reibabschnitt zumindest eine Reibfläche aufweist, welche dazu ausgelegt ist, mit einem Reibbelag in Kontakt zu treten, sodass ein Bremsmoment um die Rotationsachse entsteht oder entstehen kann, wobei der Zwischenabschnitt mehrere Finger aufweist, welche sich im Wesentlichen in Richtung der Rotationsachse erstrecken, wobei der Verbindungsabschnitt zumindest eine primäre Montagefläche und eine Vielzahl von Montageöffnungen aufweist, wobei sich die Montageöffnungen von der primären Montagefläche aus erstrecken oder durch diese hindurchragen, wobei die zumindest eine primäre Montagefläche dazu ausgelegt ist, mit einer Radnabe mittelbar oder unmittelbar zu kontaktieren, und wobei die Montageöffnungen dazu ausgelegt sind, Montagemittel aufzunehmen, um die Bremsscheibe an der Radnabe festzulegen und/oder zu verspannen. Die Bremsscheibe ist dabei derart gelagert oder lagerbar, dass diese um die Rotationsachse rotieren kann. Die Rotationsachse ist insbesondere die Achse, um welche die zu bremsende Nabe rotiert. In anderen Worte bedeutet dies, dass die Rotationsachse die Achse sein kann, um welche die Räder, die Achse oder die Welle rotiert, welche mittels der Bremsscheibe gebremst werden soll. Der Reibabschnitt der Bremsscheibe kann dabei ein einzelnes Bauteil sein, oder einstückig mit dem Zwischenabschnitt ausgestaltet sein. Insbesondere weist der Reibabschnitt zumindest eine Reibfläche auf, bevorzugt jedoch zumindest zwei Reibflächen, welche den Reibabschnitt in Richtung der Rotationsachse distal begrenzen können. Die Reibfläche bzw. die Reibflächen sind dazu ausgelegt, mit einem Reibbelag derart in Kontakt zu treten oder in Kontakt treten zu können, dass ein Drehmoment um die Rotationsachse entstehen kann. Der Zwischenabschnitt der Bremsscheibe ist derjenige Bereich der Bremsscheibe, welcher die Finger umfasst. In anderen Worten bedeutet dies, dass die Finger sich bevorzugt lediglich im Zwischenabschnitt befinden. Die Finger sind dabei nicht durch einen Materialabtrag, wie er beispielsweise bei Nuten, Ausnehmungen oder Bohrungen vorliegt, ausgebildet, sondern bevorzugt durch ein Urformverfahren gebildet, wie beispielsweise Gießen oder ein additives Fertigungsverfahren. Alternativ und/oder zusätzlich bevorzugt sind Finger insbesondere dadurch charakterisiert, dass die der Rotationsachse zugewandten und die der Rotationsachse abgewandten Flächen des Fingers nicht parallel zueinander ausgerichtet und/oder ausgebildet sind. Bevorzugt weisen die Finger, insbesondere in einer Schnittebene senkrecht zur Rotationsachse, eine zumindest bereichsweise runde, bevorzugt konkave oder konvexe, Außen- und/oder Innenkontur auf, insbesondere in Richtung und/oder im Bereich nächstliegend zur Rotationsachse. Durch die Verwendung von Fingern kann insbesondere aufgrund des großen Flächenträgheitsmoments und des geringen Kerbwirkungsfaktors eine besonders sichere Anbindung erfolgen. Besonders bevorzugt ist diese Außen- und/oder Innenkontur des Fingers dabei nicht konzentrisch zur Rotationsachse ausgebildet. In anderen Worten bedeutet dies, dass der Mittelpunkt der Krümmung, insbesondere in der Schnittebene senkrecht zur Rotationsachse, der Außen- und/oder der Innenkontur nicht auf der Rotationsachse liegt. Zweckmäßigerweise können die Finger derart ausgestaltet sein, dass sich diese in Richtung der Rotationsachse zumindest bereichsweise verjüngen, sodass Gewicht eingespart werden kann. Die Finger erstrecken sich im Wesentlichen in Richtung der Rotationsachse. Unter im Wesentlichen in Richtung der Rotationsachse ist zu verstehen, dass die Erstreckungsrichtung der Finger einen Winkel von +/- 25°, bevorzugt von +/- 12° und besonders bevorzugt von +/- 4° mit der Rotationsachse bilden. Die Erstreckungsrichtung der Finger bestimmt sich dabei insbesondere durch den Verlauf der Querschnittsschwerpunkte, wobei sich die Querschnittsschwerpunkte des Fingers zweckmäßigerweise in Ebenen bestimmen, welche eine Normale parallel zur Rotationsachse aufweisen. Durch die Finger wird der Reibabschnitt von dem Verbindungsabschnitt in Richtung der Rotationsachse bevorzugt separiert. Besonders bevorzugt dienen insbesondere die distalen Enden bzw. Endabschnitte der Finger zur Drehmoment- und/oder Kraftübertragung von dem Reibabschnitt auf die Finger bzw. von den Fingern auf den Verbindungsabschnitt. Der Verbindungsabschnitt der Bremsscheibe ist dasjenige Bauteil oder Bestandteil der selbigen, welches/r dazu ausgelegt ist, die Bremsscheibe an einer Radnabe direkt oder indirekt festzulegen. Hierzu dient die primäre Montagefläche des Verbindungsabschnitts, sodass ein flächiger Kontakt stattfinden kann. In anderen Worten ist der Verbindungsabschnitt daher dasjenige Bauteil oder Bestandteil der Bremsscheibe, welcher dazu ausgelegt ist, dass Bremsmoment auf die Radnabe über die primäre Montagefläche, insbesondere vollständig, zu übertragen. Die primäre Montagefläche liegt bevorzugt, insbesondere vollständig, in einer Ebene und weist zweckmäßigerweise eine Normale auf, welche sich im Wesentlichen in Richtung der Rotationsachse erstreckt. Die Vielzahl von Montageöffnungen, welche sich, insbesondere parallel zur Rotationsachse, von der primären Montagefläche aus erstrecken, dienen zur Aufnahme von Montagemitteln, wie beispielsweise Schrauben, Bolzen oder Nieten. Die Montagemittel sind dabei dazu ausgelegt, die Bremsscheibe an einer Radnabe festzulegen und/oder zu verspannen. Die Radnabe selbst kann beispielsweise durch einen Teil eines Radlagergehäuses, einer bekannten Nabe, einem Teil einer Welle oder einem Teil einer Achse gebildet sein.

Bevorzugt verfügt der Verbindungsabschnitt über einen Zentrierkragen. Der Zentrierkragen kann beispielsweise durch einen Vorsprung in Richtung der Rotationsachse gebildet sein. Durch die Verwendung eines Zentrierkragens kann die Montage der Bremsscheibe erleichtert werden, sodass Kosten gespart werden können. Besonders bevorzugt erstreckt sich der zumindest eine Zentrierkragen von der primären Montagefläche aus und/oder begrenzt diese zur Rotationsachse hin, um eine kompakte Bremsscheibe zu erreichen.

Zweckmäßigerweise weist der Zwischenabschnitt 5 bis 17, bevorzugt 7 bis 14 und besonders bevorzugt 9 bis 11 Finger auf. Durch die Ausgestaltung des Zwischenbereichs mit 5 bis 17 Fingern, kann erreicht werden, dass eine sichere Kraft- bzw. Momentenübertragung zwischen Reibabschnitt und Verbindungsabschnitt erfolgt. Bei der Verwendung von 7 bis 14 Fingern wird ein besonders guter Kompromiss zwischen einer zu vermeidenden Unwucht und einem geringen Gewicht der Bremsscheibe erreicht. Um eine besonders homogene Spannungsverteilung im Verbindungsabschnitt zu erreichen, ist es besonders bevorzugt, 9 bis 11 Finger im Zwischenabschnitt zu verwenden. Durch die homogene Spannungsverteilung können lokale Spannungsspitzen und die damit einhergehenden Nachteile - wie z.B. Rissbildung - vermieden werden.

Bevorzugt weist der Verbindungsabschnitt eine sekundäre Montagefläche auf, welche dazu ausgelegt ist, dass an der sekundären Montagefläche eine Felge angeordnet oder anordenbar ist. Hierdurch kann eine besonders kompakte Bauweise der Bremsscheibe erreicht werden. Die sekundäre Montagefläche kann dabei ebenfalls oder zusätzlich einen Zentrierkragen aufweisen, um die Montage der Felge zu erleichtern. Bevorzugt sind die primäre und die sekundäre Montagefläche im Wesentlichen parallel zu einander angeordnet, wobei die Montageöffnungen sowohl die primäre als auch die sekundäre Montagefläche durchragen bzw. sich von diesen aus erstrecken. Hierdurch kann erreicht werden, dass die Bremsscheibe mit denselben Montagemitteln festgelegt werden kann wie die zu montierende Felge, sodass Bauteile und Kosten gespart werden können. Besonders bevorzugt bilden die sekundäre und primäre Montagefläche dabei einen in radialer Richtung nach Innen oder Außen ragenden Montageflansch des Verbindungsabschnitts zumindest bereichsweise aus, sodass ein kompakter Verbindungsabschnitt erreicht wird.

Vorteilhafterweise erstrecken sich die Finger vom Verbindungsabschnitt in eine negative Richtung der Rotationsache. Die negative Richtung der Rotationsachse ist dabei die Richtung der Rotationsache, welche von der primären Montagefläche zur zumindest einen Reibfläche weist oder die negative Richtung der Rotationsachse kann zusätzlich oder alternativ auch durch die Richtung der Rotationsachse gebildet sein, welche von der sekundären Montagefläche zur primären Montagefläche weist. Beispielsweise erstrecken sich die Finger dabei zu zumindest 4 cm, bevorzugt zu zumindest 8 cm in Richtung der Rotationsachse, insbesondere in Richtung der negativen Rotationsachse.

Besonders bevorzugt ist der Abstand in Richtung der Rotationsachse der primären Montagefläche zur nächst liegenden Reibfläche größer als die maximale Erstreckung des Reibabschnitts in Richtung der Rotationsachse. Hierdurch kann eine besonders geringe thermische Belastung der Anbindung, insbesondere der verwendeten Montagemittel, der Bremsscheibe erreicht werden, sodass eine besonders sichere Festlegung der Bremsscheibe erfolgen kann.

Zweckmäßigerweise ist der Zwischenabschnitt einstückig mit dem Verbindungabschnitt ausgebildet. Hierdurch kann eine hohe Belastbarkeit sichergestellt werden, sodass eine sichere Drehmomentübertragung stattfinden kann. Bevorzugt ist es, wenn der Reibabschnitt dabei ein separates Bauteil zu dem Bauteil darstellt, welches den Zwischenabschnitt und den Verbindungsabschnitt umfasst. Durch diese mehrteilige Ausgestaltung der Bremsscheibe, insbesondere des Reibabschnitts, kann sichergestellt werden, dass der Wärmeübergang zwischen dem Reibabschnitt und dem Verbindungsabschnitt erschwert wird, sodass die Wärmebelastung der Radnabe gering gehalten wird und insbesondere die Radlager durch den reibungsbedingten Wärmeeintrag nicht negativ beeinflusst werden. Alternativ bevorzugt kann auch der Reibabschnitt einstückig mit dem Verbindungsabschnitt und/oder dem Zwischenabschnitt ausgebildet sein. Hierdurch wird nicht nur die Sicherheit der Drehmomentübertragung gesteigert, sondern zusätzlich kann auch die Wärmeabfuhr von der Reibfläche erhöht werden, sodass die Bremsleistung gesteigert werden kann. Einstückigkeit bedeutet dabei insbesondere, dass die Bauteile nicht durch ein, insbesondere nachträgliches, Fügeverfahren, wie beispielsweise Schweißen, stoffschlüssig aneinander gefügt sein dürfen.

Vorteilhafterweise weist der Zwischenabschnitt eine Vielzahl von Übertragungsstrukturen auf, welche insbesondere in eine radiale Richtung weisen, wobei der Reibabschnitt eine Vielzahl von Transmissionsstrukturen aufweist, wobei die Übertragungsstrukturen derart mit komplementären Transmissionsstrukturen in Eingriff stehen oder bringbar sind, dass ein Drehmoment um die Rotationsachse, insbesondere formschlüssig, übertragbar ist. Die Übertragungsstrukturen sind Elemente, wie beispielsweise Ausnehmungen oder Vorsprünge, welche zur Drehmomentübertragung auf die komplementären Transmissionsstrukturen ausgelegt sind. Komplementär ist eine Übertragungsstruktur insbesondere dann zu einer Transmissionsstruktur, wenn diese beiden Strukturen, bevorzugt unmittelbar, miteinander kontaktieren. Die radiale Richtung ist diejenige Richtung, welche radial von der Rotationsachse weg weist. Unter einem in radiale Richtung weisen kann verstanden werden, dass die Übertragungsstrukturen sich von den Fingern, insbesondere dessen Endabschnitten, aus in radiale Richtung erstrecken. Beispielsweise bilden die Übertragungsstrukturen dabei Zähne, welche in komplementäre Transmissionsstrukturen, welche insbesondere durch Vertiefungen gebildet sein können, formschlüssig eingreifen. Durch diese Drehmomentübertragung wird erreicht, dass ein hohes Drehmoment sicher übertragen werden kann. Bevorzugt greifen die Übertragungsstrukturen dabei derart in die komplementären Transmissionsstrukturen ein, dass eine Verlagerung des Zwischenabschnitts relativ zum Reibabschnitt in Richtung der Rotationsachse in positive und/oder negative Richtung und/oder in die radiale Richtung formschlüssig durch die Interaktion der Transmissionsstrukturen mit den Übertragungsstrukturen verhindert ist oder verhinderbar ist. Dies kann insbesondere durch ein Eingießen des Zwischenabschnitts in den Reibabschnitt oder des Reibabschnitts in den Zwischenabschnitt erreicht werden. Durch diese Maßnahme kann insbesondere das Auftreten von lokalen verschleißbedingten Dickenunterschieden reduziert bzw. verhindert werden, sodass Vibrationsursachen reduziert werden. Besonders vorteilhaft ist es, wenn der Reibabschnitt um die Übertragungsstrukturen des Zwischenabschnitts herum gegossen ist.

Bevorzugt ist ein Abstand des Verbindungsabschnitts zur Rotationsachse größer als ein Abstand, der zumindest einen Reibfläche zur Rotationsachse. Der Abstand des Verbindungsabschnitts zur Rotationsachse ist hierbei der maximal mögliche Abstand des Verbindungsabschnitts zur Rotationsachse oder alternativ der mittlere Abstand des Verbindungsabschnitts zur Rotationsachse. Der maßgebliche Abstand der zu mindestens einen Reibfläche zur Rotationsachse ist in diesem Zusammenhang der minimalst mögliche Abstand von der Reibfläche zur Rotationsachse. Durch diese Art der Ausgestaltung der Bremsscheibe wird eine besonders kompakte Bauweise realisiert. Bevorzugt liegt das Verhältnis aus dem Abstand der Reibfläche zur Rotationsachse zum Abstand des Verbindungsabschnitts zur Rotationsachse in einem Bereich von 0,7-0,9. Hierdurch kann die Leistung der Bremse dadurch gesteigert werden, dass die Reibfläche eine besonders große Erstreckung in die radiale Richtung aufweisen kann, ohne das die Anbindung der Bremsscheibe negativ beeinflusst wird.

Zweckmäßigerweise ist der Lochkreisdurchmesser der Montageöffnungen kleiner als der Abstand der zu mindestens einen Reibfläche von der Rotationsachse. Hierdurch kann ein geringer Bauraumbedarf der Bremsscheibe erreicht werden. Der Lochkreisdurchmesser ist dabei der gemittelte oder maximale Abstand der Montageöffnungen zu der Rotationsachse. Der Abstand der einzelnen Montageöffnungen bestimmt sich dabei durch den gedachten bzw. idealisierte Volumenschwerpunkt der Montageöffnung zur Rotationsachse in Richtung der radialen Richtung.

Bevorzugt liegt das Verhältnis aus dem Abstand von der primären Montagefläche bis zur nächstliegenden Reibfläche in Richtung der Rotationsachse zum Lochkreisdurchmesser in einem Verhältnis von 0,2 bis 1,1, bevorzugt in einem Verhältnis von 0,3 bis 0,9 und besonders bevorzugt in einem Verhältnis von 0,5 bis 0,75. Bei einem Verhältnis von 0,2 bis 1,1 kann eine besonders mechanisch belastbare Anbindung des Reibabschnitts erreicht werden. Bei einem Verhältnis von 0,3 bis 0,9 hat die Anmelderin überraschenderweise herausgefunden, dass hierdurch die Neigung zur Rissbildung im Anschlussbereich der Finger an den Verbindungsabschnitt minimiert werden kann. Bei einem Verhältnis von 0,5 bis 0,75 kann eine geringe relative Verdrehung zwischen dem Anschlussabschnitt und dem Reibabschnitt realisiert werden, was insbesondere in einem vom Benutzer als Vorteilhaft empfundenen Bremsverhalten mündet.

Erfindungsgemäß begrenzen die Finger die primäre Montagefläche zumindest bereichsweise, bevorzugt vollständig, in die radiale Richtung nach außen. Durch diese räumliche Nähe der Finger zu der primären Montagefläche wird erreicht, dass nur geringe Bereiche des Anschlussabschnitts durch die Drehmomentübertragung von der Bremsscheibe auf die Radnabe bzw. Felge belastet werden, sodass Material gespart werden kann. Zusätzlich wird hierdurch auch noch eine besonders kompakte Bauweise der Bremsscheibe ermöglicht. Unter begrenzen kann insbesondere verstanden werden, dass die Finger eine Kante der primären Montagefläche ausbilden, welche ohne das Vorhandensein der Finger nicht existieren würde.

Bevorzugt ist der minimalste Abstand der Finger zur Rotationsachse kleiner als der maximale Abstand der Montageöffnungen zur Rotationsachse. Hierdurch kann eine kompakte Bauweise der Bremsscheibe erzielt werden. Maßgeblich für die Bestimmung des Abstands der Finger zur Rotationsachse ist dabei der Bereich der Finger, mit welchem diese am Anschlussabschnitt festgelegt sind. Der maximale Abstand der Montageöffnungen bestimmt sich insbesondere durch den maximal möglichen Abstand der Montageöffnungen zur Rotationsachse in Richtung der radialen Richtung.

Zweckmäßigerweise ist der minimalste Abstand der Finger zur Rotationsachse kleiner als der Lochkreisdurchmesser. Hierdurch kann eine besonders bauraumsparende Bremsscheibe erreicht werden.

Besonders bevorzugt ist der minimalste Abstand der Finger zur Rotationsachse kleiner als der minimalste Abstand der Montageöffnung zur Rotationsachse. Der Abstand der Finger zur Rotationsachse bestimmt sich insbesondere, wie bereits beschrieben, durch den Abstand des Anschlussbereichs der Finger an den Anschlussabschnitt in Richtung der radialen Richtung. Durch diese Ausgestaltung der Bremsscheibe kann nicht nur eine besonders kompakte Bauweise der Bremsscheibe erreicht werden, sondern zusätzlich kann hierdurch realisiert werden, dass die Finger bei einem Versagen der Montagemittel als Notdrehmomentübertragungseinheiten fungieren können, sodass die Sicherheit der Bremsscheibe erhöht wird. Besonders bevorzugt ist es, wenn die Finger die primäre Montagefläche dabei in nicht zusammenhängende Bereiche unterteilt. Hierdurch kann der vorhandene Bauraum optimal ausgenutzt werden. Unter "nicht zusammenhängende Bereiche" ist dabei in diesem Zusammenhang zu verstehen, dass die primäre Montagefläche in unterschiedliche separate Flächen - bedingt durch die Finger - unterteilt wird.

Zweckmäßigerweise sind zumindest zwei in Umfangsrichtung benachbarte Finger durch einen Steg miteinander verbunden. Hierdurch kann die Torsionssteifigkeit der Bremsscheibe erhöht werden. Die Umfangsrichtung bildet dabei mit der Rotationsachse und der radialen Richtung ein Zylinderkoordinatensystem aus, wobei die Umfangsrichtung die Polare- bzw. Winkelrichtung darstellt bzw. bildet. Die Stege können insbesondere durch Stäbe und/oder Platten gebildet sein, wobei es besonders zweckmäßig ist, wenn die Stege zumindest eine Erstreckung in Richtung der Rotationsachse von 2,5 cm aufweisen. Bevorzugt sind dabei alle Finger der Bremsscheibe in Umfangsrichtung jeweils über einen Steg mit den benachbarten Fingern verbunden. Besonders bevorzugt sind die Stege nicht nur mit den Fingern sondern auch mit der primären Montagefläche verbunden. Insbesondere kann es dabei zweckmäßig sein, wenn die Stege einstückig mit den Fingern und/oder mit dem Verbindungsabschnitt ausgebildet sind, um eine sichere Kraft- und/oder Momentenübertragung zu erreichen.

Vorteilhafterweise begrenzt der zumindest eine Steg die primäre Montagefläche zumindest bereichsweise in die radiale Richtung nach außen. Hierdurch wird die primäre Montagefläche (oder die einzelnen Subflächen der primären Montagefläche) gegen das Eintreten von Verunreinigung geschützt. Zusätzlich wird hierdurch auch noch die Torsions- und Biegesteifigkeit der Bremsscheibe erhöht, sodass auch hohe Bremsmomente, wie sie insbesondere bei Nutzfahrzeugen auftreten, sicher übertragen werden können. Besonders bevorzugt ist es, um eine hohe Torsionssteifigkeit zu erreichen, wenn die Finger und die Stege, die die Finger miteinander verbinden, dabei einen geschlossenen Ring bilden. In anderen Worten bedeutet dies, dass es einen, insbesondere kreisförmigen, Ring gibt, welcher die Rotationsachse vollständig umgibt und lediglich durch die Finger und die Stege gebildet ist.

Bevorzugt weisen die Finger eine veränderliche Querschnittsfläche entlang der Rotationsachse auf. Hierdurch kann eine besonders leichte Bremsscheibe durch Anpassung der Querschnittsfläche der Finger an die auftretenden Belastungen erreicht werden. Besonders bevorzugt nimmt die Querschnittsfläche insbesondere in negativer Richtung der Rotationsachse zumindest Abschnittsweise, insbesondere über die Hälfte der Erstreckung der Finger in Richtung der Rotationsachse, ab. Die Querschnittsfläche bestimmt sich dabei in einer Schnittebene, deren Normale insbesondere parallel zur Rotationsachse ist. Unter einer veränderlichen Querschnittsfläche ist zu verstehen, dass die Querschnittsfläche eine, bevorzugt kontinuierliche, Veränderung entlang der Rotationsachse aufweist.

Erfindungsgemäß umfasst eine Bremsenanordnung, insbesondere für Nutzfahrzeuge, eine Bremsscheibe, wie sie bereits beschrieben wurde, eine Radnabe und eine Radachse, wobei die primäre Montagefläche der Bremsscheibe mit der Radnabe in Kontakt treten kann, ohne dass die Radnabe relativ zur Achse verlagert werden muss. In anderen Worten bedeutet dies, dass es sich bei der Bremsscheibe und der Radnabe um eine Anordnung handelt, bei der die Bremsscheibe demontiert werden kann, ohne dass die Radnabe verlagert oder demontiert werden muss. Hierdurch kann die Montage derart vereinfacht werden, dass, insbesondere im Nutzfahrzeugbereich, Kosten eingespart werden können.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde.

Es zeigen:
Figur 1 einen Schnitt durch eine erfindungsgemäße Bremsscheibe und einen Teil einer erfindungsgemäßen Bremsenanordnung;
Figur 2 eine perspektivische Ansicht einer erfindungsgemäßen Bremsscheibe;
Figur 3 eine weitere perspektivische Ansicht einer erfindungsgemäßen Bremsscheibe.

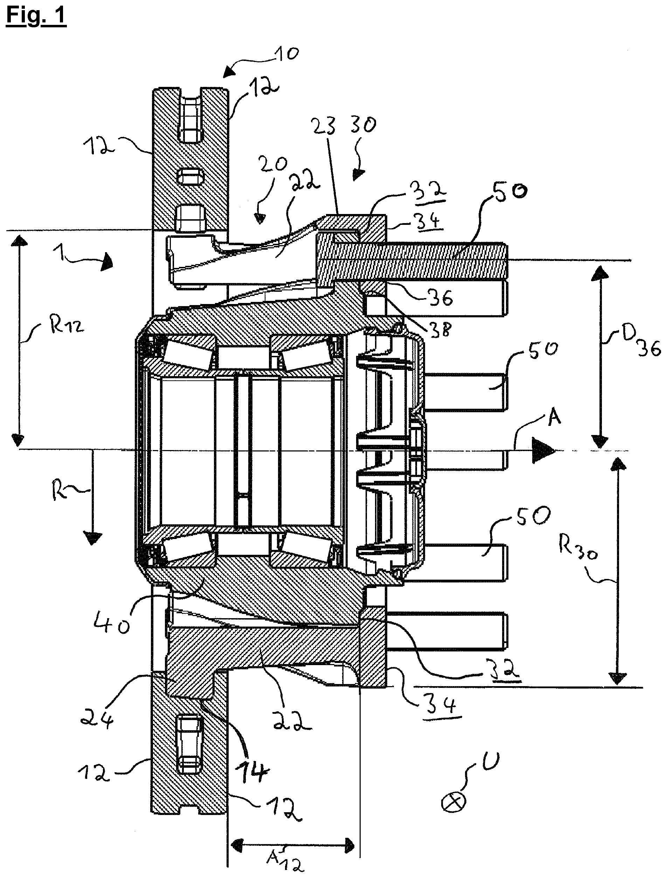

Die **Figur 1** zeigt eine erfindungsgemäße Bremsscheibe 1, welche über einen Reibabschnitt 10, einen Zwischenabschnitt 20 und einen Verbindungsabschnitt 30 verfügt. Der Reibabschnitt 10 ist in der dargestellten Ausführungsform durch einen innenbelüfteten Reibring gebildet, welcher zwei parallele Reibflächen 12 umfasst. Die Reibflächen 12 weisen dabei einen Abstand R₁₂ zur Rotationsachse A auf. Der Zwischenabschnitt 20 ist in der dargestellten Ausführungsform durch die Finger 22 und die Stege 23 gebildet, wobei in der dargestellten Schnittansicht lediglich ein Steg 23 erkennbar ist. Der Zwischenabschnitt 20 ist einstückig mit dem Verbindungsabschnitt 30 ausgeführt, wobei der Verbindungsabschnitt 30 eine primäre Montagefläche 32, eine sekundäre Montagefläche 34 und einen Abstand zur Rotationsachse R₃₀ in Richtung der radialen Richtung R aufweist. Die primäre Montagefläche 32 ist von der nächstliegenden Reibfläche 12 in Richtung der Rotationsache A um den Abstand A₁₂ beabstandet. Zur Festlegung der Bremsscheibe 1 an einer Radnabe 40 verfügt die primäre Montagefläche 32 über Montageöffnungen 36, welche sich bis zu der sekundären Montageflächen 34 erstrecken, und wobei durch die Montageöffnungen 36 Montagemittel 50 geführt sind. Um eine Zentrierung der Bremsscheibe 1 auf der Radnabe 40 zu erleichtern, verfügt der Verbindungsabschnitt 30 über einen Zentrierkragen 38, welche die primäre Montagefläche 32 in radialer Richtung R nach innen begrenzt. Die radiale Richtung R, die Rotationsachse A und die Umfangsrichtung U bilden dabei ein rechtshändiges Zylinderkoordinatensystem miteinander. Die Montageöffnungen 36 weisen einen Lochkreisdurchmesser D₃₆ zur Rotationsachse A auf. Um ein Drehmoment um die Rotationsachse A von dem Reibabschnitt 10 auf den Zwischenabschnitt 20 zu übertragen, verfügt der Reibabschnitt 10 über Transmissionsstrukturen 14, in welche komplementäre Übertragungsstrukturen 24 formschlüssig eingreifen. Die Übertragungsstrukturen 24 sind dabei in den Endabschnitten der Finger 22 angeordnet bzw. einstückig mit den Fingern 22 ausgebildet. Die Transmissionsstrukturen 14 und die Übertragungsstrukturen 24 erstrecken sich dabei in die radiale Richtung R.

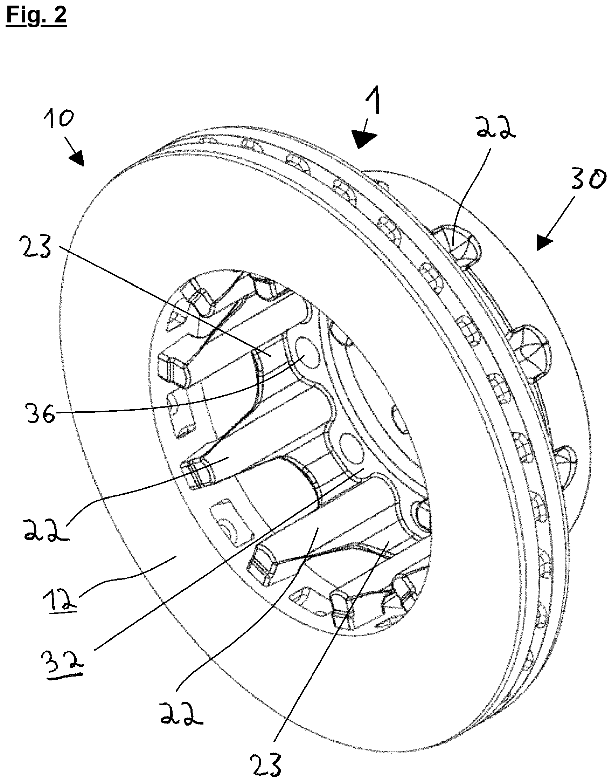

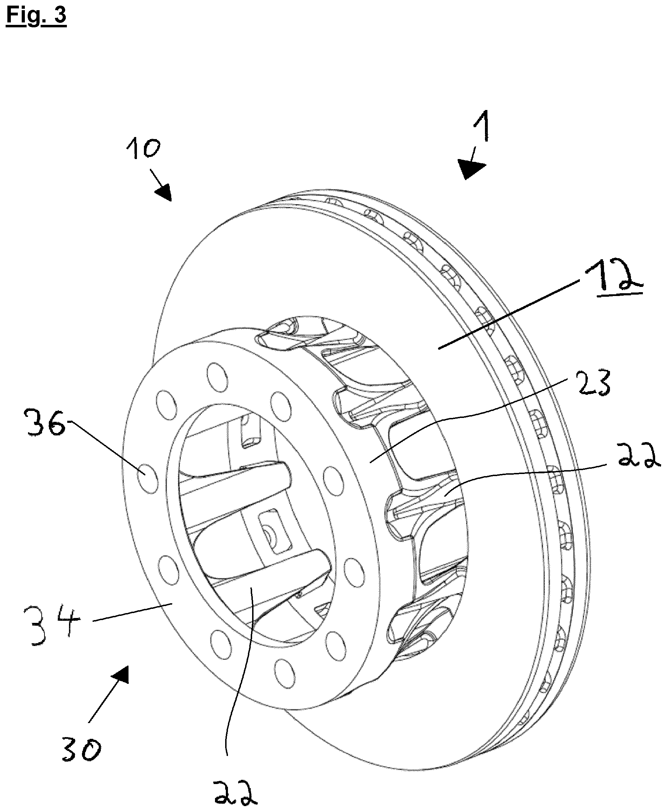

Die **Figur 2** und die **Figur 3** zeigen jeweils eine perspektivische Ansicht einer erfindungsgemäßen Bremsscheibe 1, prinzipiell können die beiden Darstellung eine Ausführungsform oder verschiedene Ausführungsformen aus unterschiedlichen Blickrichtungen zeigen. Der Reibabschnitt 10 ist durch einen innenbelüfteten Reibring gebildet, welcher zwei Reibflächen 12 aufweist. Der Reibabschnitt 10 ist über die Finger 22, welche den Zwischenabschnitt 20 zusammen mit den plattenförmigen Stegen 23 bilden, mit dem Verbindungsabschnitt 30 verbunden. Die Finger 22 wiesen dabei eine konvexe Außenkontur in Richtung und im Bereich nächstliegend zur Rotationsachse A auf. Zusätzlich bilden die Finger 22, um Gewicht zu sparen, eine Aussparung an dem Radial äußeren Umfang des Verbindungsabschnitts 30 aus, wie es in der Figur 2 rechst und in der Figur 3 links zu erkennen ist. Die primäre Montagefläche 32 des Verbindungsabschnitts 30 verfügt über Montageöffnungen 36 zur Festlegung. Radial nach außen ist die primäre Montagefläche 32 dabei durch die Stege 23 und die Finger 22 begrenzt. Die Montageöffnungen 36 erstrecken sich von der primären Montagefläche 32 bis zu der sekundären Montagefläche 34 in Richtung der Rotationsachse A.

### Bezugszeichenliste

- 1 -: Bremsscheibe
- 10 -: Reibabschnitt
- 12 -: Reibfläche
- 14 -: Transmissionsstruktur
- 20 -: Zwischenabschnitt
- 22 -: Finger
- 23 -: Steg
- 24 -: Übertragungsstruktur
- 30 -: Verbindungsabschnitt
- 32 -: primäre Montagefläche
- 34 -: sekundäre Montagefläche
- 36 -: Montageöffnung
- 38 -: Zentrierkragen
- 40 -: Radnabe
- 50 -: Montagemittel
- A -: Rotationsachse
- A₁₂ -: Abstand von der primären Montagefläche zur Reibfläche in Richtung der Rotationsachse
- D₃₆ -: Lochkreisdurchmesser
- R -: radiale Richtung
- R₁₂ -: Abstand der Reibfläche zur Rotationsachse
- R₃₀ -: Abstand des Verbindungsabschnitts zur Rotationsachse
- U -: Umfangsrichtung

## Patentansprüche

1. Bremsscheibe (1), insbesondere für Nutzfahrzeuge, umfassend einen Reibabschnitt (10), einen Zwischenabschnitt (20) und einen Verbindungsabschnitt (30),
wobei die Bremsscheibe (1) dazu ausgelegt ist, um eine Rotationsachse (A) zu rotieren oder rotierbar gelagert zu sein,
wobei der Reibabschnitt (10) zumindest eine Reibfläche (12) aufweist, welche dazu ausgelegt ist, mit einem Reibbelag in Kontakt zu treten, sodass ein Bremsmoment um die Rotationsache (A) entsteht oder entstehen kann, wobei der Zwischenabschnitt (20) mehrere Finger (22) aufweist, welche sich im Wesentlichen in Richtung der Rotationsachse (A) erstrecken,
wobei der Verbindungsabschnitt (30) zumindest eine primäre Montagefläche (32) und eine Vielzahl von Montageöffnungen (36) aufweist,
wobei sich die Montageöffnungen (36) von der primären Montagefläche (32) aus erstrecken,
wobei die zumindest eine primäre Montagefläche (32) dazu ausgelegt ist, mit einer Radnabe (40) mittelbar/unmittelbar zu kontaktieren, und wobei die Montageöffnungen (36) dazu ausgelegt sind, Montagemittel (50) aufzunehmen, um die Bremsscheibe (1) an der Radnabe (40) festzulegen, wobei die Finger (22) die primäre Montagefläche (32) zumindest bereichsweise in die radiale Richtung (R) nach außen begrenzen.

2. Bremsscheibe (1) gemäß Anspruch 1,
wobei der Zwischenabschnitt (20) 5 bis 17, bevorzugt 7 bis 14 und besonders bevorzugt 9 bis 11 Finger (22) aufweist.

3. Bremsscheibe (1) gemäß einem der vorhergehenden Ansprüche,
wobei der Verbindungsabschnitt (30) eine sekundäre Montagefläche (34) aufweist, welche dazu ausgelegt ist, dass an der sekundären Montagefläche (34) eine Felge (60) angeordnet ist oder anordenbar ist.

4. Bremsscheibe (1) gemäß einem der vorhergehenden Ansprüche,
wobei sich die Finger (22) vom Verbindungsabschnitt (30) in eine negative Richtung der Rotationsache (A) erstrecken.

5. Bremsscheibe (1) gemäß einem der vorhergehenden Ansprüche, wobei der Zwischenabschnitt (20) einstückig mit dem Verbindungsabschnitt (30) ausgebildet ist.

6. Bremsscheibe (1) gemäß einem der vorhergehenden Ansprüche,
wobei der Zwischenabschnitt (20) eine Vielzahl von Übertragungsstrukturen (24) aufweist, welche insbesondere in eine radiale Richtung (R) weisen, wobei der Reibabschnitt (10) eine Vielzahl von Transmissionsstrukturen (14) aufweist,
wobei die Übertragungsstrukturen (24) derart mit komplementären Transmissionsstrukturen (14) in Eingriff stehen oder bringbar sind, dass ein Drehmoment um die Rotationsachse (A), insbesondere formschlüssig, übertragbar ist.

7. Bremsscheibe (1) gemäß einem der vorhergehenden Ansprüche,
wobei ein Abstand (R₃₀) des Verbindungsabschnitts (30) zur Rotationsachse (A) größer ist als ein Abstand (R₁₂) der zumindest einen Reibfläche (12) zur Rotationsachse (A).

8. Bremsscheibe (1) gemäß einem der vorhergehenden Ansprüche,
wobei der Lochkreisdurchmesser (D₃₆) der Montageöffnungen (36) kleiner ist als der Abstand (R₁₂) der zumindest einen Reibflächen (12) von der Rotationsachse (A).

9. Bremsscheibe (1) gemäß Anspruch 8,
wobei das Verhältnis aus dem Abstand (A₁₂) von der primären Montagefläche (32) bis zur nächstliegenden Reibfläche (12) in Richtung der Rotationsache (A) zum Lochkreisdurchmesser (D₃₆) in einem Verhältnis von 0,2 bis 1,1, bevorzugt in einem Verhältnis 0,3 bis 0,9 und besonders bevorzugt in einem Verhältnis von 0,5 bis 0,75, liegt.

10. Bremsscheibe (1) gemäß einem der vorhergehen Ansprüche,
wobei der minimalste Abstand der Finger (22) zur Rotationsachse (A) kleiner ist als der maximale Abstand der Montageöffnungen (36) zur Rotationsachse (A).

11. Bremsscheibe (1) gemäß einem der Ansprüche 8 bis 10,
wobei der minimalste Abstand der Finger (22) zur Rotationsachse (A) kleiner ist als der Lochkreisdurchmesser (D₃₆).

12. Bremsscheibe (1) gemäß einem der vorhergehen Ansprüche,
wobei der minimalste Abstand der Finger (22) zur Rotationsachse (A) kleiner ist als der minimalste Abstand der Montageöffnungen (36) zur Rotationsachse (A).

13. Bremsscheibe (1) gemäß einem der vorhergehenden Ansprüche,
wobei zumindest zwei in Umfangsrichtung (U) benachbarte Finger (22) durch einen Steg (23) miteinander verbunden sind.

14. Bremsanordnung umfassend eine Bremsscheiben (1) nach einem der vorhergehenden Ansprüche, eine Radnabe (40) und eine Achse,
wobei die primäre Montagefläche (32) der Bremsscheibe (1) mit der Radnabe (40) in Kontakt treten kann, ohne dass die Radnabe (40) relativ zur Achse verlagert werden muss.

## Claims

1. A brake disc (1), in particular for utility vehicles, comprising a friction section (10), an intermediate section (20) and a connecting section (30),
wherein the brake disc (1) is designed to rotate about an axis of rotation (A) or to be rotatably mounted,
wherein the friction section (10) has at least one friction surface (12) which is designed to come into contact with a friction lining so that a braking torque arises or can arise around the axis of rotation (A),
wherein the intermediate portion (20) has a plurality of fingers (22) which extend substantially in the direction of the axis of rotation (A),
wherein the connecting section (30) has at least one primary mounting surface (32) and a plurality of mounting holes (36),
wherein the mounting holes (36) extend from said primary mounting surface (32),
wherein the at least one primary mounting surface (32) is adapted to contact a wheel hub (40) indirectly/directly, and
wherein the mounting holes (36) are designed to receive mounting means (50) for securing the brake disc (1) to the wheel hub (40),
wherein the fingers (22) outwardly limit the primary mounting surface (32) at least in regions in the radial direction (R).

2. The brake disc (1) according to claim 1,
wherein the intermediate section (20) has 5 to 17, preferably 7 to 14 and most preferably 9 to 11 fingers (22).

3. The brake disc (1) according to any one of the preceding claims,
wherein the connecting section (30) has a secondary mounting surface (34) adapted to have a rim (60) arranged or arrangeable on the secondary mounting surface (34).

4. The brake disc (1) according to any one of the preceding claims,
wherein the fingers (22) extend from the connecting section (30) in a negative direction of the axis of rotation (A).

5. The brake disc (1) according to any one of the preceding claims,
wherein the intermediate section (20) is formed integrally with the connecting section (30).

6. The brake disc (1) according to any one of the preceding claims,
wherein the intermediate section (20) has a plurality of transfer structures (24) which point in particular in a radial direction (R),
wherein the friction section (10) has a plurality of transmission structures (14),
wherein the transfer structures (24) are in engagement or can be brought into engagement with complementary transmission structures (14) in such a way that a torque about the axis of rotation (A) can be transmitted, in particular in a positive-locking manner.

7. The brake disc (1) according to any one of the preceding claims,
wherein a distance (R₃₀) of the connecting section (30) to the axis of rotation (A) is greater than a distance (R₁₂) of the at least one friction surface (12) to the axis of rotation (A).

8. The brake disc (1) according to any one of the preceding claims,
wherein the hole-circle diameter (D₃₆) of the mounting holes (36) is smaller than the distance (R₁₂) of the at least one friction surface (12) from the axis of rotation (A).

9. The brake disc (1) according to claim 8,
wherein the ratio of the distance (A₁₂) from the primary mounting surface (32) to the nearest friction surface (12) in the direction of the axis of rotation (A) to the hole-circle diameter (D₃₆) is in a ratio of 0.2 to 1.1, preferably in a ratio of 0.3 to 0.9 and most preferably in a ratio of 0.5 to 0.75.

10. The brake disc (1) according to any one of the preceding claims,
wherein the minimum distance of the fingers (22) from the axis of rotation (A) is smaller than the maximum distance of the mounting holes (36) from the axis of rotation (A).

11. The brake disc (1) according to one of claims 8 to 10,
wherein the minimum distance of the fingers (22) from the axis of rotation (A) is smaller than the hole-circle diameter (D₃₆).

12. The brake disc (1) according to any one of the preceding claims,
wherein the minimum distance of the fingers (22) from the axis of rotation (A) is smaller than the minimum distance of the mounting holes (36) from the axis of rotation (A).

13. The brake disc (1) according to any one of the preceding claims,
wherein at least two fingers (22) adjacent in circumferential direction (U) are connected to each other by a bridge (23).

14. A brake assembly comprising a brake disc (1) according to any one of the preceding claims, a wheel hub (40) and an axle, wherein the primary mounting surface (32) of the brake disc (1) can contact the wheel hub (40) without the wheel hub (40) having to be displaced relative to the axle

## Revendications

1. Disque de frein (1), en particulier pour véhicules utilitaires, comportant au moins une portion de friction (10), une portion intermédiaire (20) et une portion de liaison (30),
le disque de frein (1) étant conçu pour tourner ou être monté de manière à pouvoir tourner autour d'un axe de rotation (A),
la portion de friction (10) présentant au moins une surface de friction (12) conçue pour venir en contact avec une garniture de friction, de sorte qu'un couple de freinage s'établit ou peut s'établir autour de l'axe de rotation (A),
la portion intermédiaire (20) comprenant plusieurs doigts (22) s'étendant sensiblement en direction de l'axe de rotation (A),
la portion de liaison (30) comprenant au moins une surface de montage primaire (32) et une multitude d'ouvertures de montage (36),
les ouvertures de montage (36) s'étendant à partir de la surface de montage primaire (32),
ladite au moins une surface de montage primaire (32) étant conçue pour venir en contact direct/indirect avec un moyeu de roue (40), et
les ouvertures de montage (36) étant conçues pour recevoir des moyens de montage (50) pour immobiliser le disque de frein (1) sur le moyeu de roue (40),
les doigts (22) délimitant vers l'extérieur la surface de montage primaire (32) au moins localement en direction radiale (R).

2. Disque de frein (1) selon la revendication 1,
dans lequel
la portion intermédiaire (20) comprend 5 à 17, de préférence 7 à 14 et de manière particulièrement préférée 9 à 11 doigts (22).

3. Disque de frein (1) selon l'une des revendications précédentes,
dans lequel
la portion de liaison (30) présente une surface de montage secondaire (34) conçue pour agencer ou pouvoir agencer une jante (60) sur la surface de montage secondaire (34).

4. Disque de frein (1) selon l'une des revendications précédentes,
dans lequel
les doigts (22) s'étendent depuis la portion de liaison (30) dans une direction négative de l'axe de rotation (A).

5. Disque de frein (1) selon l'une des revendications précédentes,
dans lequel
la portion intermédiaire (20) est réalisée d'un seul tenant avec la portion de liaison (30).

6. Disque de frein (1) selon l'une des revendications précédentes,
dans lequel
la portion intermédiaire (20) comprend une multitude de structures de transfert (24) qui sont dirigées en particulier dans une direction radiale (R), la portion de friction (10) présentant une multitude de structures de transmission (14),
les structures de transfert (24) étant ou pouvant être amenées en engagement avec des structures de transmission complémentaires (14) de manière à pouvoir transférer un couple de rotation autour de l'axe de rotation (A) en particulier par coopération de forme.

7. Disque de frein (1) selon l'une des revendications précédentes,
dans lequel
une distance (R₃₀) de la portion de liaison (30) par rapport à l'axe de rotation (A) est supérieure à une distance (R₁₂) de ladite au moins une surface de friction (12) par rapport à l'axe de rotation (A).

8. Disque de frein (1) selon l'une des revendications précédentes,
dans lequel
le diamètre (D₃₆) du cercle des trous des ouvertures de montage (36) est plus petit que la distance (R₁₂) de ladite au moins une surface de friction (12) par rapport à l'axe de rotation (A).

9. Disque de frein (1) selon la revendication 8,
dans lequel
le rapport de la distance (A₁₂) de la surface de montage primaire (32) vers la surface de friction (12) la plus proche en direction de l'axe de rotation (A) sur le diamètre (D₃₆) du cercle du trou est de 0,2 à 1,1, de préférence de 0,3 à 0,9, et de manière particulièrement préférée de 0,5 à 0,75.

10. Disque de frein (1) selon l'une des revendications précédentes,
dans lequel
la distance minimale des doigts (22) par rapport à l'axe de rotation (A) est inférieure à la distance maximale des ouvertures de montage (36) par rapport à l'axe de rotation (A).

11. Disque de frein (1) selon l'une des revendications 8 à 10,
dans lequel
la distance minimale des doigts (22) par rapport à l'axe de rotation (A) est plus petite que le diamètre (D₃₆) du cercle du trou.

12. Disque de frein (1) selon l'une des revendications précédentes,
dans lequel
la distance minimale des doigts (22) par rapport à l'axe de rotation (A) est inférieure à la distance minimale des ouvertures de montage (36) par rapport à l'axe de rotation (A).

13. Disque de frein (1) selon l'une des revendications précédentes,
dans lequel
au moins deux doigts (22) voisins en direction périphérique (U) sont reliés l'un à l'autre par une barrette (23).

14. Ensemble de frein comportant un disque de frein (1) selon l'une des revendications précédentes, un moyeu de roue (40) et un axe,
dans lequel
la surface de montage primaire (32) du disque de frein (1) peut venir en contact avec le moyeu de roue (40) sans que le moyeu de roue (40) doive être déplacé par rapport à l'axe.
